# EUROPEAN PATENT SPECIFICATION

(11) **EP 1 665 434 B1**
(45) Date of publication and mention of the grant of the patent: **22.05.2013**
(21) Application number: 04784166.3
(22) Date of filing: 15.09.2004
(51) Int. Cl.: H01M 8/04, H01M 16/00, C09K 5/12, H01M 4/86, H01M 8/02, C09K 5/10

(54) **INTEGRATED PLATFORM AND FUEL CELL COOLING**
INTEGRIERTE PLATTFORM UND BRENNSTOFFZELLENKÜHLUNG
REFROIDISSEMENT INTEGRE DE PLATE-FORME ET DE PILE A COMBUSTIBLE

(30) Priority: 15.09.2003 US 662561
(43) Date of publication of application: 07.06.2006
(73) Proprietor: Intel Corporation, Santa Clara, CA 95052 (US)
(72) Inventor: ROCKE, Michael, Argyle, TX 76226 (US); POKHARNA, Himanshu, Santa Clara, CA 95054 (US); DISTEFANO, Eric, Livermore, CA 94550 (US)
(74) Representative: Goddar, Heinz J.
(86) International application number: PCT/US2004/030214
(87) International publication number: WO 2005/029626

(56) References cited:
- JP-A- 2001 332 287
- US-A- 3 660 166
- US-A- 4 664 988
- US-A- 5 252 410
- US-A1- 2002 011 327
- US-A1- 2002 182 462
- US-A1- 2003 115 013
- US-A1- 2003 157 386
- US-B1- 6 175 495
- HAHN R ET AL: "Thermal management of portable micro fuel cell stacks" 19TH ANNUAL IEEE SEMICONDUCTOR THERMAL MEASUREMENT AND MANAGEMENT SYMPOSIUM. SEMI-THERM. PROCEEDINGS 2003. SAN JOSE, CA, MARCH 11 - 13, 2003, IEEE SEMICONDUCTOR THERMAL MEASUREMENT AND MANAGEMENT SYMPOSIUM. SEMI-THERM, NEW YORK, NY : IEEE, US, 11 March 2003 (2003-03-11), pages 202-209, XP010747020 ISBN: 0-7803-7793-1

## Description

### Field

The present invention relates generally to cooling electronic systems, and more specifically to cooling of fuel cells.

### Background

Fuel cells typically generate heat as a by-product of operation. As fuel cell designs mature and fuel cells become smaller, it becomes more difficult to remove the generated heat.

US 2003/0115013 A1 discloses a thermal management method for an electronic system in which the temperature of a process power supply component in a computer system is sensed and in response to the sensed temperature having risen to a predetermined threshold, the processor clock signal is modulated, or the processor clock signal is transitioned to a lower frequency or the chip core voltage of the data processor is lowered.

JP 2001332287 A discloses a fitting method for an electronic energy generating device capable of efficiently removing water generated on an oxygen electrode from the surface of the oxygen electrode.

### Brief Description of the Drawings

Figure 1 shows a diagram of an electronic system a with cooling system;
Figure 2 shows a diagram of example heat generating devices;
Figure 3 shows an exploded view of a fuel cell;
Figure 4 shows a diagram of a control system;
Figure 5 shows an electronic system having a processor and memory;
Figure 6 shows a flowchart in accordance with various embodiments of the present invention; and
Figures 7-9 show system diagrams in accordance with various embodiments of the present invention.

### Description of Embodiments

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

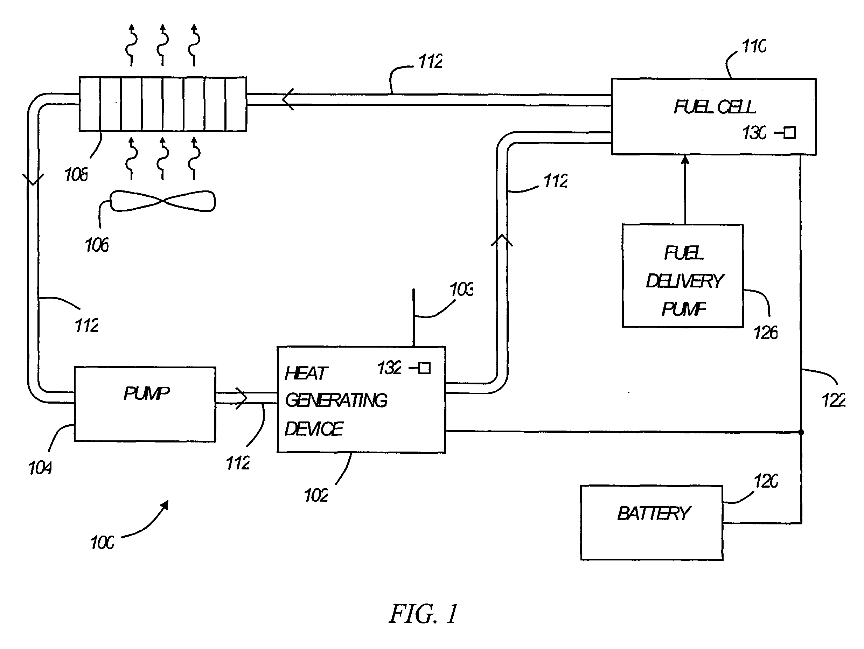

Figure 1 shows a diagram of an electronic system with a cooling system. Electronic system 100 includes fuel cell 110, fuel delivery pump 126, battery 120, and heat generating device 102. Fuel cell 110 may be any type of fuel cell capable of producing power. For example, fuel cell 110 may be a direct methanol fuel cell, a reformed methanol fuel cell, or the like. Battery 120 may be any type of battery capable of storing an electrical charge. Heat generating device 102 may be any device within electronic system 100 that generates heat. In some embodiments, heat generating device 102 may include an integrated circuit that receives power from the combination of fuel cell 110 and battery 120.

Electronic system 100 also includes a cooling system to cool fuel cell 110 and heat generating device 102. The cooling system includes cooling system pump 104, fan 106, and heat exchanger 108. The cooling system also includes a fluid cooling medium that flows in path 112. Path 112 may include flexible tubing, rigid piping, or the like. In some embodiments, path 112 may also include valves and quick-disconnects throughout. Path 112 traverses heat generating device 102 and fuel cell 110 to remove heat from those devices, and also traverses heat exchanger 108 to remove heat from electronic system 100.

As shown in Figure 1, path 112 traverses in the order of heat generating device 102, fuel cell 110, heat exchanger 108, and pump 104, but this is not a limitation of the present invention. For example, path 112 may traverse fuel cell 110 prior to heat generating device 102, or after heat exchanger 108. Further, in some embodiments, multiple heat exchangers are included. For example, path 112 may traverse one or more heat exchangers after passing through each heat generating device.

The cooling system recirculates a fluid cooling medium to cool various components of electronic system 100. The fluid cooling medium may be any type of fluid capable of carrying heat. In some embodiments, the fluid cooling medium may be water, and in other embodiments, the fluid cooling medium may be a liquid metal such as a gallium-indium based low melting point alloy. In some embodiments, the fluid cooling medium experiences a phase change while traversing path 112, and in other embodiments, the fluid cooling medium remains in the same state. For example, in some embodiments, a fluid cooling medium may transition from a liquid to a vapor and back while traversing path 112.

In some embodiments, heat generating device 102 includes a heat sink through which the fluid cooling medium can pass. In other embodiments, heat generating device 102 includes packaging having integrated cooling passages through which the fluid cooling medium can pass. Fuel cell 110 may also include a heat sink through which the fluid cooling medium can pass. In other embodiments, fuel cell 110 includes electrodes with integrated cooling passages through which the fluid cooling medium can pass. Example embodiments of fuel cells with integrated cooling passages are described with reference to later figures.

In some embodiments, electronic system 100 includes temperature sensors to sense a temperature of one or more components or subsystems of the system. For example, as shown in Figure 1, electronic system 100 includes temperature sensor 130 to sense a temperature of fuel cell 110, and also includes temperature sensor 132 to sense a temperature of heat generating device 102. Any number of temperature sensors may be included in electronic system 100. Although only two temperature sensors are shown in Figure 1, this is not a limitation of the present invention. Any type of temperature sensing device may be utilized. For example, in some embodiments, thermocouples or thermal diodes are used for temperature sensors. In some embodiments, temperature sensors may be used in conjunction with one or more control systems. Example embodiments of control systems are described below with reference to later figures.

Fuel cell 110, battery 120, and heat generating device 102 are coupled by conductor 122. In some embodiments, fuel cell 110 provides power to heat generating device 102 and to battery 120 using conductor 122. In this manner, fuel cell 110 may charge battery 120 and provide power to subsystems of electronic system 100.

In operation, an instantaneous power requirement of a subsystem or component may exceed the steady-state output of fuel cell 110. This may occur when a component requests more than the maximum output of fuel cell 110 or when a component experiences a transient power requirement above the current operating level of fuel cell 110. Battery 120 may provide power to subsystems during periods when power demands on fuel cell 110 are high. For example, battery 120 may provide power to heat generating device 102 using conductor 122.

Fuel cell 110 may produce power (and heat) at various rates. For example, if fuel is delivered to fuel cell 110 at a low rate, the power and heat produced by fuel cell 110 may be relatively low. In contrast, if fuel is delivered to fuel cell 110 at a high rate, the power and heat produced by fuel cell 110 may be relatively high. The fuel delivery rate may be modified using various settings for fuel delivery pump 126.

In some embodiments, cooling system pump 104 includes a variable control. By varying the rate at which pump 104 pumps the fluid cooling medium, the amount of cooling provided by the cooling system may be varied. Some embodiments of the present invention include intelligent control of the fuel delivery pump and the cooling system pump to allow for efficient power delivery and heat removal. Example embodiments are described with reference to later figures.

Electronic system 100 is shown with major components in a block diagram. Electronic system 100 may include many more subsystems, components, and the like, without departing from the scope of the present invention. Further, electronic system 100 may be any platform that may benefit from a fuel cell and integrated cooling system. For example, in some embodiments, electronic system 100 may be a notebook computer or a laptop computer, and may include many additional computer components.

In some embodiments, system 100 includes antenna 103. Antenna 103 may be used to transmit and receive signals. For example, in some embodiments, heat generating device 102 may include wireless communications capabilities, and antenna 103 may be coupled to integrated circuits, components, or subsystems within heat generating device 102. Any of the disclosed embodiments may have wireless communications capabilities, and also may include one or more antennae.

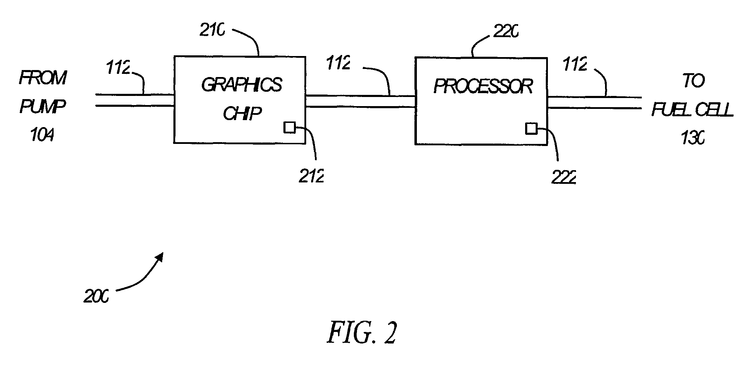

Figure 2 shows example heat generating devices. Heat generating devices 200 includes two integrated circuits: graphics chip 210, and processor 220. In some embodiments, heat generating devices 200 are in a system, such as heat generating device 102 in electronic system 100. Graphics chip 210 and processor 220 are shown coupled to fluid cooling path 112. In some embodiments, graphics chip 210 and processor 220 include heat sinks with fluid passages through which the fluid cooling medium can pass. In other embodiments, graphics chip 210 and processor 220 include packaging with integral fluid passages through which the fluid cooling medium can pass.

Although Figure 2 shows two devices, this is not a limitation of the present invention. For example, heat generating devices 200 may include memory components, memory controllers or peripheral controllers, or any other component or subsystem that generates heat. Fluid cooling path 112 may traverse the components or subsystems in any order without departing from the scope of the present invention. Further, in some embodiments, heat generating devices 200 may only include one device.

In some embodiments, heat generating devices 200 includes temperature sensors to sense a temperature of one or more components or subsystems. For example, as shown in Figure 2, graphics chip 210 includes temperature sensor 212, and processor 220 includes temperature sensor 222. Any number of temperature sensors may be included without departing from the scope of the present invention. In some embodiments, temperature sensors may be used in conjunction with one or more control systems. Example embodiments of control systems are described below with reference to later figures.

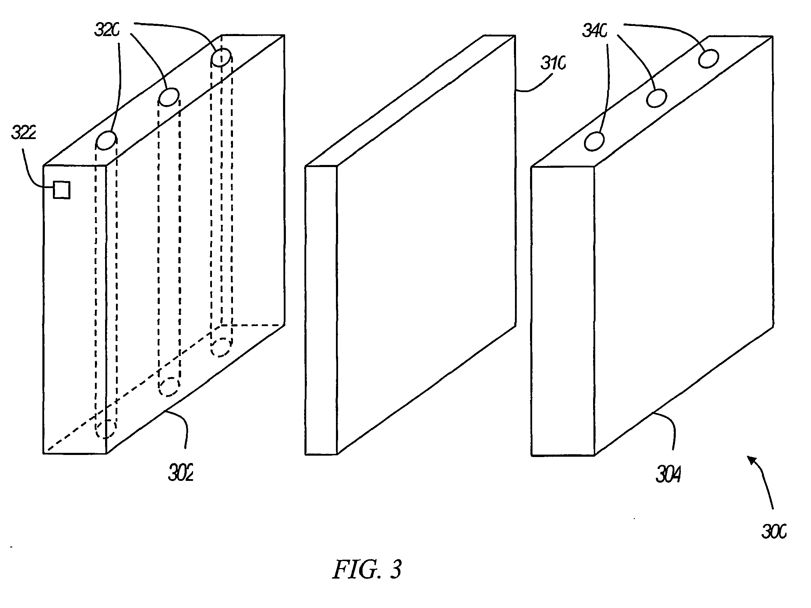

Figure 3 shows an exploded view of a fuel cell. Fuel cell 300 includes electrodes 302 and 304, and stack 310. Fuel cell 300 may be any type of fuel cell that includes electrodes. For example, fuel cell 300 may be a direct methanol fuel cell, a reformed methanol fuel cell, or the like. Fuel cell 300 may be included in an electronic system with integrated platform and fuel cell cooling. For example, fuel cell 300 may be used as fuel cell 110 (Figure 1). Stack 310 is shown thin for ease of illustration. In some embodiments, stack 310 includes membranes, electrolytes, and the like. Further, in some embodiments, stack 310 includes more electrodes to allow multiple cells to be electrically coupled in series.

As shown in Figure 3, electrode 302 includes fluid passageways 320, and electrode 304 includes fluid passageways 340. Fluid passageways 320 and 340 may be utilized to carry a fluid cooling medium. In some embodiments, the passageways 320 and 340 are interconnected. For example, in some embodiments, a fluid path exists within electrode 302, between electrodes 302 and 304, and within electrode 304. In these embodiments, a fluid inlet may be present on electrode 302, and a fluid outlet may be present on electrode 304.

In some embodiments, a fluid passageway exists in a heatsink that is separate from electrode 302. In these embodiments, the heatsink may be part of a fluid cooling path, and the heatsink may be thermally affixed to one or both of electrodes 302 or 304.

In some embodiments, fuel cell 300 includes one or more temperature sensors. As shown in Figure 3, fuel cell 300 includes temperature sensor 322 coupled to electrode 302. A temperature sensor may be coupled to an electrode with a fluid passageway or to an electrode without a fluid passageway. A temperature sensor may also be coupled to a part of fuel cell 300 other than an electrode.

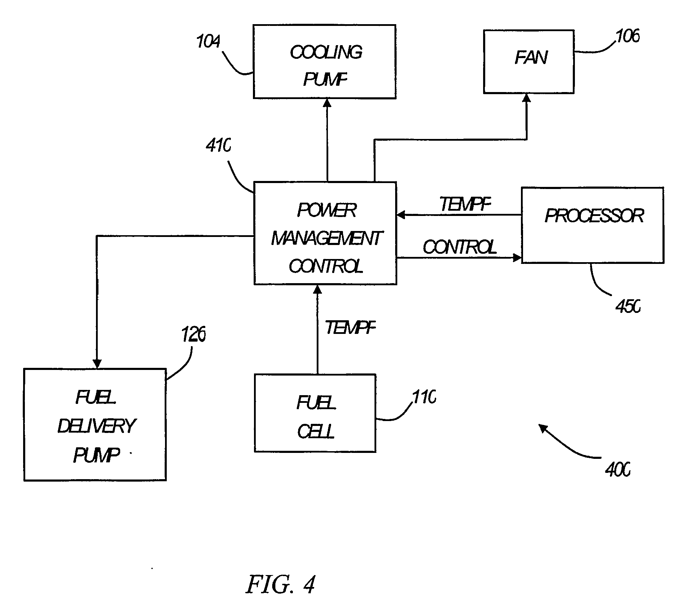

Figure 4 shows a diagram of a control system. Control system 400 includes power management control block 410, fuel delivery pump 126, cooling pump 104, fan 106, fuel cell 110, and processor 450. In operation, power management control block 410 receives a fuel cell temperature (TEMPF) from a temperature sensor in fuel cell 110, and also receives a processor temperature (TEMPP) from a temperature sensor in processor 450. In some embodiments, the processor temperature corresponds to the junction temperature of transistors within processor 450. Power management control block 410 may also receive temperature information from other components. For example, power management control block 410 may receive temperature information describing the temperature of memory devices or controllers, graphics devices or controllers, or the like.

In response to temperature information, power management control block 410 may vary the rate of cooling pump 104, fan 106, and/or fuel delivery pump 126. Power management control block 410 also controls the frequency or performance of processor 450. For example, if one or more temperatures are high, then power management control block 410 may increase the flow rate of cooling pump 104, increase the speed of fan 106, reduce the voltage of processor 450, reduce the operating frequency of processor 450, reduce the rate of fuel delivery pump 126, or any combination. If one or more temperatures are low, power management control block 410 may decrease the flow rate of cooling pump 104, decrease the speed of fan 106, increase the voltage of processor 450, increase the operating frequency of processor 450, increase the flow rate of fuel delivery pump 126, or any combination.

Power management control block 410 may be implemented in any suitable manner. For example, in some embodiments, power management control block 410 may be implemented in hardware as a state machine or a dedicated sequential controller. Also for example, in other embodiments, power management control block 410 may be implemented in software as part of an operating system or power management software application. Power management control block 410 may also be implemented as a combination of hardware and software. The manner in which power management control block 410 is implemented is not a limitation of the present invention.

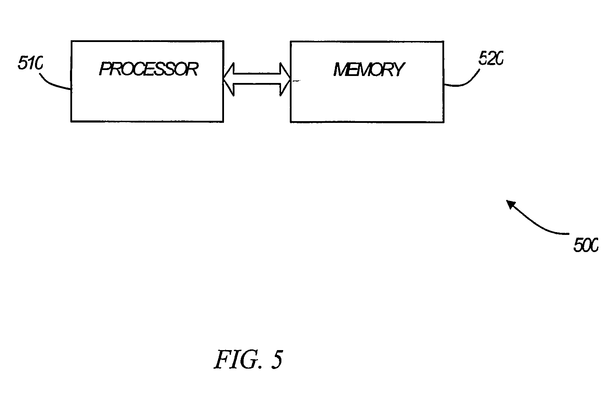

Figure 5 shows an electronic system having a processor and memory. Figure 5 shows system 500 including processor 510, and memory 520. Processor 510 may be a processor that can run an operating system that implements a control block such as that shown in Figure 4. For example, processor 510 may receive temperature information and power information, and modify power output levels or power consumption levels, or modify cooling system performance. Also for example, processor 510 may perform any of the method embodiments of the present invention. Processor 510 represents any type of processor, including but not limited to, a microprocessor, a microcontroller, a digital signal processor, a personal computer, a workstation, or the like.

Memory 520 represents an article that includes a machine readable medium. For example, memory 520 represents any one or more of the following: a hard disk, a floppy disk, random access memory (RAM), dynamic random access memory (DRAM), static random access memory (SRAM), read only memory (ROM), flash memory, CDROM, or any other type of article that includes a medium readable by processor 520. Memory 520 can store instructions for performing the execution of the various method embodiments of the present invention.

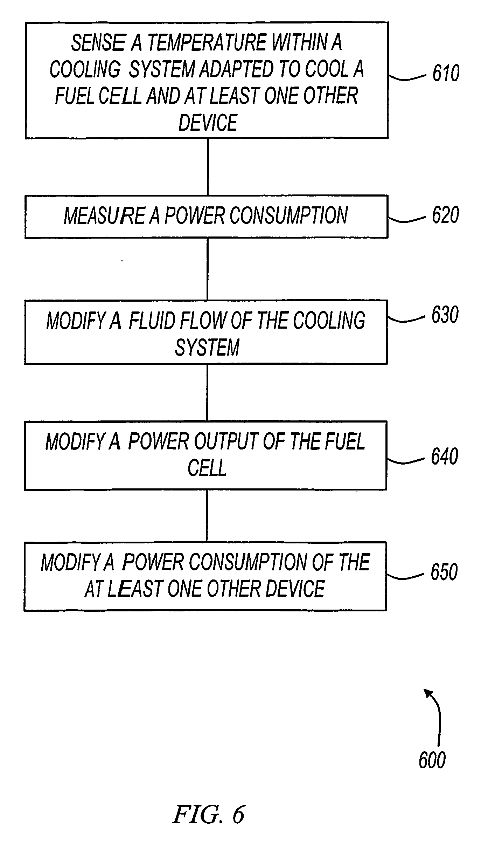

Figure 6 shows a flowchart in accordance with various embodiments of the present invention. In some embodiments, method 600 may be used to modify power output or power consumption of various devices. In other embodiments, method 600 may be used to modify heat generation or cooling of various devices. In some embodiments, method 600, or portions thereof, is performed by a an electronic system with integrated platform and fuel cell cooling, or a control system, embodiments of which are shown in the various figures. Method 600 is not limited by the particular type of apparatus, software element, or person performing the method. The various actions in method 600 may be performed in the order presented, or may be performed in a different order. Further, in some embodiments, some actions listed in Figure 6 are omitted from method 600.

Method 600 is shown beginning at block 610 in which a temperature is sensed within a cooling system adapted to cool a fuel cell and at least one other device. In some embodiments, the at least one other device may be powered by the fuel cell, or partially powered by the fuel cell. The sensed temperature may be a temperature of the fuel cell or may be a temperature of the at least one other device. For example, the temperature of a processor such as processor 450 (Figure 4) may be sensed, or the temperature of a fuel cell such as fuel cell 110 (Figure 1) may be sensed.

At 620, a power consumption is measured. In some embodiments, the power consumption may be a power consumption of a processor such as processor 450 (Figure 4) or processor 510 (Figure 5). Power consumption may be measured by measuring an actual current flow, or may be measured to checking a state of a device. For example, a device such as a processor may have multiple power states that can be checked by reading a register value. In some embodiments of the present invention, power consumption is not measured, and power state information is not available. In these embodiments, block 620 is omitted from method 600.

At 630, a fluid flow of the cooling system is modified. The fluid flow may be modified by modifying a flow rate of a cooling system pump such as pump 104 (Figures 1, 4). In addition to modifying a fluid flow, a fan speed may also be modified. In some embodiments, the fluid flow or fan speed may be modified to increase the cooling effect of the cooling system in response to elevated temperatures. In other embodiments, the fluid flow or fan speed may be modified to decrease the cooling effect of the cooling system in response to reduced temperatures.

At 640, a power output of the fuel cell may be modified. The power output of the fuel cell may be modified by modifying a flow rate of a fuel delivery pump such as fuel delivery pump 126 (Figures 1, 4). In some embodiments, the power output of the fuel cell may be increased due to increased power requirements. In other embodiments, the power output of a fuel cell may be increased to charge a battery when the cooling system has excess cooling capacity. For example, a control system such as control system 400 (Figure 4) may sense lower temperatures that indicate the cooling system has extra cooling capacity. The extra cooling capacity may be utilized by increasing the flow of a fuel delivery pump to increase the power generation of the fuel cell to charge a battery.

At 650, the power consumption of the at least one device may be modified. In some embodiments, actions represented by block 650 may correspond to throttling the performance of a microprocessor to reduce the generated heat. For example, a control system may reduce the power consumption of a processor when a temperature of the processor is elevated. Likewise, in some embodiments, a control system may increase the power consumption of a processor to increase performance when the temperature of the processor is low.

Method 600 represents the intelligent control of power generation, power consumption, and cooling in an electronic system with integrated platform and fuel cell cooling. When excess cooling capacity exists in the cooling system, the excess cooling capacity may be used to produce more power with a fuel cell to charge a battery or to power the system to a higher performance level.

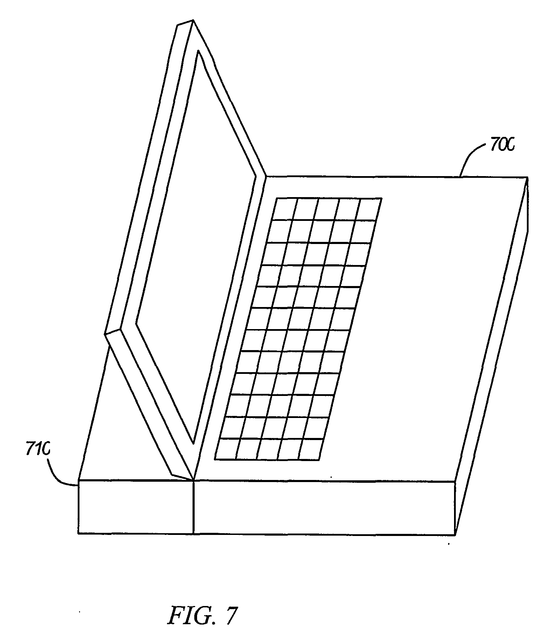

Figures 7-9 show electronic systems in accordance with various embodiments of the present invention. Each of Figures 7-9 may include systems such as electronic system 100 (Figure 1), or control system 400 (Figure 4). Further, each of the electronic systems shown in Figures 7-9 may include wireless communications capabilities, and further may include one or more antennae.

Figure 7 shows a computer having an external fuel cell. External fuel cell 710 may be a fuel cell such as fuel cell 110 (Figure 1) or fuel cell 300 (Figure 3). In some embodiments, external fuel cell 710 is coupled to computer 700 by multiple conductors and fluid lines. For example, conductors may be provided to receive power from fuel cell 710 and also to receive temperature information from a temperature sensor within fuel cell 710. Conductors may also be provided to allow computer 700 to modify the flow rate of a fuel delivery pump in fuel cell 700. In some embodiments, fluid lines with quick-disconnects may be included to between fuel cell 710 and computer 700 to allow the easy removal of fuel cell 710.

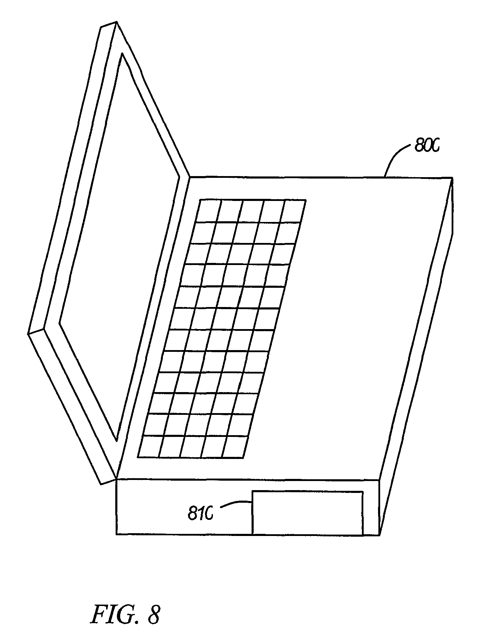

Figure 8 shows a computer with a fuel cell in a "swappable bay." As used herein, the term "swappable bay" refers to a bay substantially within the form factor of computer 800. The swappable bay may or may not accept devices other than fuel cell 810. For example, the swappable bay may accept devices such as a DVD drive, a battery, or the like.

Fuel cell 810 may be a fuel cell such as fuel cell 110 (Figure 1) or fuel cell 300 (Figure 3). In some embodiments, the swappable bay includes multiple electrical conductors and fluid lines. For example, conductors may be provided to receive power from fuel cell 810 and also to receive temperature information from a temperature sensor within fuel cell 810. Conductors may also be provided to allow computer 800 to modify the flow rate of a fuel delivery pump in fuel cell 800. In some embodiments, fluid lines with quick-disconnects may be included to between fuel cell 810 and computer 800 to allow the easy removal of fuel cell 810.

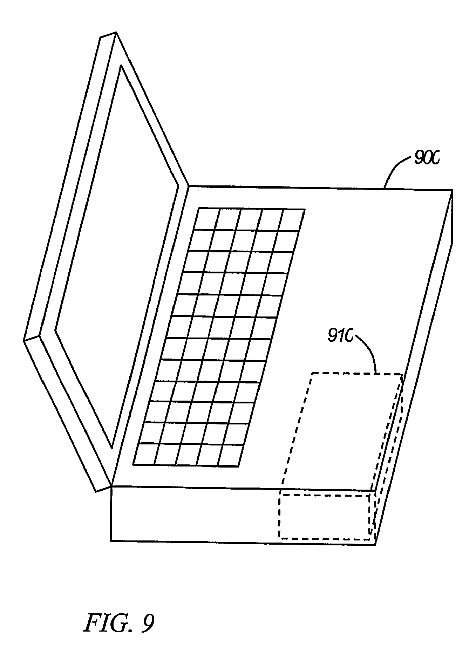

Figure 9 shows a computer with a semi-permanently affixed fuel cell. As used herein, the term "semi-permanently affixed" refers to a device that is not designed to be readily removed by a consumer. Although fuel cell 910 is semi-permanently affixed within computer 900, a fuel cartridge within, or coupled to, fuel cell 910 may be readily removed by a consumer. For example, in embodiments that include a fuel cell powered by methanol, a disposable or refillable methanol canister may be readily removable. Fuel cell 910 may be a fuel cell such as fuel cell 110 (Figure 1) or fuel cell 300 (Figure 3).

## Claims

1. An apparatus (400) comprising:
a fuel cell (110);
a processor (450);
a cooling system to cool the fuel cell and the processor, the cooling system including a fluid medium that is recirculated to remove heat from the fuel cell and the processor;
a first temperature sensor (130) to sense a first temperature of the fuel cell (110) and a second temperature sensor (132, 222) to sense a second temperature of the processor (450); and
a control system (410) to control an operating frequency of the processor in response to the first temperature of the fuel cell and the second temperature of the processor.

2. The apparatus of claim 1 wherein the fuel cell includes at least one electrode through which the fluid medium passes.

3. The apparatus of claim 1 further comprising a pump to pump (104) the fluid medium.

4. The apparatus of claim 3 wherein the control system (410) adapted to modify a fluid flow in response to the temperature sensed by the temperature sensor (130).

5. The apparatus of claim 1 wherein the control system (410) is adapted to modify a power output level of the fuel cell in response to the temperature sensed by the temperature sensor (130).

6. The apparatus of claim 1 further comprising a plurality of heat generating devices coupled to the cooling system.

7. The apparatus of claim 1 wherein the fluid medium comprises a liquid metal.

8. The apparatus of claim 1 wherein the cooling system is adapted to have the fluid medium transition through a phase change.

9. A method comprising:
sensing a first temperature of a fuel cell (110) and a second temperature of a processor (450) within a cooling system adapted to cool the fuel cell (110) and the processor (450) using a recirculated fluid medium; and
modifying an operating frequency of the processor (450) in response to the first temperature of the fuel cell and the second temperature of the processor.

10. The method of claim 9 wherein sensing a temperature comprises sensing a temperature of the fuel cell (110).

11. The method of claim 9 wherein sensing a temperature comprises sensing a temperature of the processor (450).

12. The method of claim 11 wherein modifying an operating frequency comprises increasing the operating frequency when the temperature drops.

13. An electronic system (100) comprising:
a fuel cell (110);
a processor (450);
a cooling system to cool the fuel cell and the processor, wherein the cooling system includes a fluid medium that is recirculated to remove heat from the fuel cell and the processor;
a first temperature sensor (130) to sense a first temperature of the fuel cell and a second temperature sensor (132, 222) to sense a second temperature of the processor within the cooling system; and
a control system (410) to modify an operating frequency of the processor in response to the first temperature of the fuel cell and the second temperature of the processor.

14. The electronic system of claim 13 wherein the electronic system comprises a computer (700).

15. The electronic system of claim 14 wherein the fuel cell (710) is external to the computer (700).

16. The electronic system of claim 14 wherein the fuel cell (810) is in a swappable bay of the computer (800).

17. The electronic system of claim 14 wherein the fuel cell (910) is semi-permanently affixed within the computer (900).

## Patentansprüche

1. Vorrichtung (400), welche Folgendes umfasst:
eine Brennstoffzelle (110);
einen Prozessor (450);
ein Kühlsystem, um die Brennstoffzelle und den Prozessor zu kühlen, wobei das Kühlsystem ein Fluidmedium aufweist, welches in Umlauf gebracht wird, um Wärme von der Brennstoffzelle und dem Prozessor weg zu transportieren;
einen ersten Temperatursensor (130), um eine erste Temperatur der Brennstoffzelle (110) zu erfassen, und einen zweiten Temperatursensor (132, 222), um eine zweite Temperatur des Prozessors (450) zu erfassen; und
ein Regelsystem (410) zum Regeln einer Betriebsfrequenz des Prozessors in Antwort auf die erste Temperatur der Brennstoffzelle und die zweite Temperatur des Prozessors.

2. Vorrichtung nach Anspruch 1, wobei die Brennstoffzelle zumindest eine Elektrode, durch welche das Fluidmedium hindurchströmt, aufweist.

3. Vorrichtung nach Anspruch 1, welche weiter eine Pumpe (104) umfasst, um das Fluidmedium zu pumpen.

4. Vorrichtung nach Anspruch 3, wobei das Regelsystem (410) dazu eingerichtet ist, einen Fluidfluss in Antwort auf die durch den Temperatursensor (130) erfasste Temperatur zu modifizieren.

5. Vorrichtung nach Anspruch 1, wobei das Regelsystem (410) dazu eingerichtet ist, ein Leistungsausgabeniveau der Brennstoffzelle in Antwort auf die durch den Temperatursensor (130) erfasste Temperatur zu modifizieren.

6. Vorrichtung nach Anspruch 1, welche weiter eine Mehrzahl von Wärme erzeugenden Einrichtungen, welche mit dem Kühlsystem gekoppelt sind, umfasst.

7. Vorrichtung nach Anspruch 1, wobei das Fluidmedium ein Flüssigmetall umfasst.

8. Vorrichtung nach Anspruch 1, wobei das Kühlsystem derart eingerichtet ist, dass das Fluidmedium einen Phasenübergang durchläuft.

9. Verfahren, welches Folgendes umfasst:
Erfassen einer ersten Temperatur einer Brennstoffzelle (110) und einer zweiten Temperatur eines Prozessors (450) in einem Kühlsystem, welches zum Kühlen der Brennstoffzelle (110) und des Prozessors (450) unter Verwendung eines in Umlauf gebrachten Fluidmediums eingerichtet ist; und
Modifizieren einer Betriebsfrequenz des Prozessors (450) in Antwort auf die erste Temperatur der Brennstoffzelle und die zweite Temperatur des Prozessors.

10. Verfahren nach Anspruch 9, wobei das Erfassen einer Temperatur ein Erfassen einer Temperatur der Brennstoffzelle (110) umfasst.

11. Verfahren nach Anspruch 9, wobei das Erfassen einer Temperatur ein Erfassen einer Temperatur des Prozessors (450) umfasst.

12. Verfahren nach Anspruch 11, wobei das Modifizieren einer Betriebsfrequenz umfasst, dass die Betriebsfrequenz erhöht wird, wenn die Temperatur fällt.

13. Elektronisches System (100), welches Folgendes umfasst:
eine Brennstoffzelle (110);
einen Prozessor (450);
ein Kühlsystem zum Kühlen der Brennstoffzelle und des Prozessors, wobei das Kühlsystem ein Fluidmedium, welches in Umlauf gebracht wird, um Wärme von der Brennstoffzelle und dem Prozessor weg zu transportieren, aufweist;
einen ersten Temperatursensor (130) zum Erfassen einer ersten Temperatur der Brennstoffzelle und einen zweiten Temperatursensor (132, 222) zum Erfassen einer zweiten Temperatur des Prozessors in dem Kühlsystem; und
ein Regelsystem (410) zum Modifizieren einer Betriebsfrequenz des Prozessors in Antwort auf die erste Temperatur der Brennstoffzelle und die zweite Temperatur des Prozessors.

14. Elektronisches System nach Anspruch 13, wobei das elektronische System einen Computer (700) umfasst.

15. Elektronisches System nach Anspruch 14, wobei die Brennstoffzelle (710) extern zu dem Computer (700) ist.

16. Elektronisches System nach Anspruch 14, wobei die Brennstoffzelle (810) in einem austauschbaren Einschub des Computers (800) ist.

17. Elektronisches System nach Anspruch 14, wobei die Brennstoffzelle (910) halbpermanent in dem Computer (900) angebracht ist.

## Revendications

1. Appareil (400) comprenant :
une pile à combustible (110) ;
un processeur (450) ;
un système de refroidissement pour refroidir la pile à combustible et le processeur, le système de refroidissement comprenant un milieu fluide qui est remis en circulation pour retirer la chaleur de la pile à combustible et du processeur ;
un premier capteur de température (130) pour détecter une première température de la pile à combustible (110) et un deuxième capteur de température (132, 222) pour détecter une deuxième température du processeur (450) ; et
un système de commande (410) pour commander une fréquence de fonctionnement du processeur en réponse à la première température de la pile à combustible et à la deuxième température du processeur.

2. Appareil selon la revendication 1, dans lequel la pile à combustible comprend au moins une électrode à travers laquelle le milieu fluide passe.

3. Appareil selon la revendication 1, comprenant en outre une pompe pour pomper (104) le milieu fluide.

4. Appareil selon la revendication 3, dans lequel le système de commande (410) est conçu pour modifier une circulation de fluide en réponse à la température détectée par le capteur de température (130).

5. Appareil selon la revendication 1, dans lequel le système de commande (410) est conçu pour modifier un niveau de sortie de puissance de la pile à combustible en réponse à la température détectée par le capteur de température (130).

6. Appareil selon la revendication 1, comprenant en outre une pluralité de dispositifs de génération de chaleur couplés au système de refroidissement.

7. Appareil selon la revendication 1, dans lequel le milieu fluide comprend un métal liquide.

8. Appareil selon la revendication 1, dans lequel le système de refroidissement est conçu pour obtenir la transition de milieu fluide par un changement de phase.

9. Procédé comprenant :
la détection d'une première température d'une pile à combustible (110) et d'une deuxième température d'un processeur (450) dans un système de refroidissement conçu pour refroidir la pile à combustible (110) et le processeur (450) en utilisant un milieu fluide remis en circulation ; et
la modification de la fréquence de fonctionnement du processeur (450) en réponse à la première température de la pile à combustible et de la deuxième température du processeur.

10. Procédé selon la revendication 9, dans lequel la détection d'une température comprend la détection d'une température de la pile à combustible (110).

11. Procédé selon la revendication 9, dans lequel la détection d'une température comprend la détection d'une température du processeur (450).

12. Procédé selon la revendication 11, dans lequel la modification d'une fréquence de fonctionnement comprend l'augmentation de la fréquence de fonctionnement lorsque la température chute.

13. Système électronique (100) comprenant :
une pile à combustible (110) ;
un processeur (450) ;
un système de refroidissement pour refroidir la pile à combustible et le processeur, dans lequel le système de refroidissement comprend un milieu fluide qui est remis en circulation pour retirer la chaleur de la pile à combustible et du processeur ;
un premier capteur de température (130) pour détecter une première température de la pile à combustible et un deuxième capteur de température (132, 222) pour détecter une deuxième température du processeur dans le système de refroidissement ; et
un système de commande (410) pour modifier une fréquence de fonctionnement du processeur en réponse à la première température de la pile à combustible et à la deuxième température du processeur.

14. Système électronique selon la revendication 13, dans lequel le système électronique comprend un ordinateur (700).

15. Système électronique selon la revendication 14, dans lequel la pile à combustible (710) est à l'extérieur de l'ordinateur (700).

16. Système électronique selon la revendication 14, dans lequel la pile à combustible (810) est dans une baie échangeable de l'ordinateur (800).

17. Système électronique selon la revendication 14, dans lequel la pile à combustible (910) est ajoutée de manière semi-permanente dans l'ordinateur (900).
